# EUROPEAN PATENT APPLICATION

(11) **EP 4 815 408 A1**
(43) Date of publication of application: **30.09.2026**
(21) Application number: 26167487.3
(22) Date of filing: 25.03.2026
(51) Int. Cl.: H04L 67/06, H04L 12/66, H04L 67/14, H04L 67/2871, H04L 69/18

(54) **COMMUNICATION APPARATUS AND CONTROL METHOD THEREOF**

(30) Priority: 26.03.2025 JP 2025052441
(71) Applicant: CANON KABUSHIKI KAISHA, Ohta-ku Tokyo 146-8501 (JP)
(72) Inventor: OHSHIMA, Hideaki, Ohta-ku, Tokyo, 146-8501 (JP)
(74) Representative: TBK

(57) **Abstract**

Disclosed is a communication apparatus (100) capable of communicating with an external communication device (200, 201) using Internet Protocol. In a case of performing communication with a first external communication device (200, 201) on a local network, the communication apparatus (100) runs a first communication protocol and a second communication protocol as application layer protocols on the Internet Protocol in a case where communication with an external network (202) can be performed through the local network, and runs the first communication protocol and not run the second communication protocol in a case where communication with the external network (202) cannot be performed.

## Description

### TECHNICAL FIELD

The present disclosure generally relates to a communication apparatus and a control method thereof.

### BACKGROUND

In recent years, most electronic devices such as digital cameras have a function for connecting to an external communication apparatus via a network. Japanese Patent No. 6168867 discloses an electronic device including a wireless LAN unit capable of operating in an infrastructure mode and operating in a peer-to-peer mode in parallel.

However, Japanese Patent No. 6168867 does not disclose a situation where communication is established with the external communication device using different application layer protocols in the same mode in the wireless LAN unit.

### SUMMARY

The present disclosure, in one aspect thereof, provides a communication device capable of efficiently running a plurality of application layer protocols.

The present disclosure in its first aspect provides a communication apparatus as specified in claim 1. Optional features are specified in claims 2 to 10.

The present disclosure in its second aspect provides a control method as specified in claim 11.

The present disclosure in its third aspect provides a computer program as specified in claim 12.

Features of the present disclosure will become apparent from the following description of embodiments with reference to the attached drawings. The following description of embodiments is given by way of example.

### BRIEF DESCRIPTION OF THE DRAWINGS

The accompanying drawings, which are incorporated in and constitute a part of the specification, illustrate embodiments of the present disclosure, and together with the description, serve to explain the principles of the embodiments.
Fig. 1 is a block diagram showing an example of a functional configuration of a digital camera, which is an example of a communication apparatus according to an embodiment.
Figs. 2A to 2B are diagrams showing examples of a configuration of communication between the communication apparatus and an external communication device according to an embodiment.
Fig. 3 is a flowchart relating to a communication operation in a first embodiment.
Fig. 4 is a flowchart relating to a communication operation in a second embodiment.
Fig. 5 is a diagram showing an example of screens displayed in an embodiment.
Fig. 6 is a diagram showing another example of screens displayed in an embodiment.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

Note that the following describes a configuration in which embodiments according to the present disclosure are implemented in a digital camera, which is an example of an image processing apparatus. However, an image capturing function is not essential to the embodiments according to the present disclosure. The embodiments of the present disclosure can be implemented in any electronic device including one or more operational circuits or processors. Such electronic devices include a video camera, a computer device (a personal computer, a tablet computer, a media player, a PDA, etc.), a smartphone, a smart watch, a game console, a robot, a drone, and a drive recorder. These are merely examples, and the embodiments according to the present disclosure can also be implemented in other electronic devices.

### First Embodiment

### Configuration of Digital Camera 100

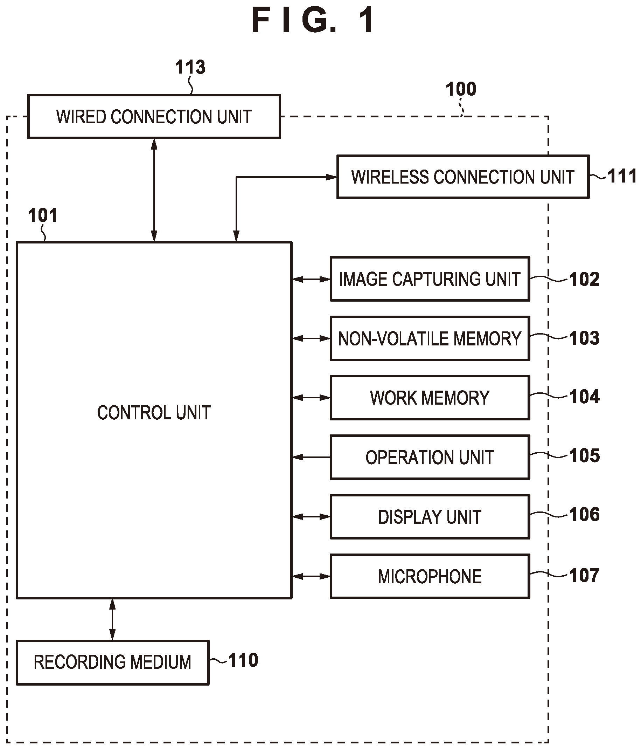

Fig. 1 is a block diagram showing an example of a functional configuration of a digital camera 100, which is an example of a communication apparatus according to the first embodiment. Except for portions (e.g., a lens, pixels of an image sensor, an antenna, a recording medium 110, etc.) that can be clearly realized with hardware alone, the functional blocks of the digital camera 100 can each be implemented by software, or a combination of software and hardware. For example, the functional blocks may each be realized with dedicated hardware such as an ASIC. Also, the functional blocks may each be realized by a processor such as a CPU executing a program stored in a memory. Note that a plurality of functional blocks may be realized with a common configuration (e.g., one ASIC). Hardware that realizes part of the function of a given functional block may be included in hardware that realizes another functional block.

A control unit 101 includes one or more processors (hereinafter referred to as CPUs) capable of executing a program. The control unit 101 reads a program stored, for example, in a non-volatile memory 103 into a work memory 104, and executes the program by the CPU, thus controlling operations of the functional blocks to realize the function of the digital camera 100 described below.

An image capturing unit 102 includes, for example, an image sensor, and an image-capturing optical system that forms an optical image of a subject on an image capturing plane of the image sensor. The image-capturing optical system includes an aperture and a plurality of lenses. The plurality of lenses include a focus lens that adjusts the focal distance of the image-capturing optical system. The image sensor may be a known CCD or CMOS color image sensor including color filters based on a primary-color Bayer array, for example. The image sensor includes a pixel array in which a plurality of pixels are arranged twodimensionally, and a peripheral circuit for reading out signals from the pixels. Each pixel accumulates electric charge corresponding to the amount of incident light through photoelectric conversion. By reading out, from each pixel, a signal having a voltage corresponding to the amount of electric charge accumulated during an exposure period, a group of pixel signals (analog image signals) representing an optical image formed on the image capturing plane can be obtained.

The control unit 101 applies A/D conversion or predetermined image processing to the analog image signal read out from the image sensor, thus generating a signal and image data corresponding to the use, and obtaining and/or generating various types of information. The control unit 101 generates, for example, an evaluation value for auto exposure control (AE) based on luminance information of the image data, and determines exposure conditions such as an aperture value, a shutter speed, and capturing sensitivity. In addition, the control unit 101 generates, for example, an evaluation value for auto focus detection (AF) based on contrast information of the image data, and controls the position of the focus lens such that a focus detection region is in focus.

The control unit 101 further generates image data for display and image data for recording. The image data for display is used for display in a display unit 106, and the image data for recording is used for recording onto a recording medium 110. At least one of the image data for display and the image data for recording may be transmitted to an external apparatus. The control unit 101 encodes the image data according to the setting, or generates a data file in which the image data is to be stored.

The non-volatile memory 103 is an electrically rewritable, non-volatile memory, for example. The non-volatile memory 103 stores a program that can be executed by the CPU of the control unit 101, set values, GUI data, and so forth.

The work memory 104 is used for reading a program to be executed by the CPU of the control unit 101, and saving values required during execution of the program. The work memory 104 is also used as a buffer for image data and audio data obtained using the image capturing unit 102 and a microphone 107, a work area of the control unit 101, a video memory of the display unit 106, and so forth.

An operation unit 105 includes a plurality of input devices for allowing the digital camera 100 to receive instructions from the user. The individual input devices included in the operation unit 105 have names corresponding to the functions assigned thereto. Examples of the input devices include a power button for instructing to turn on or off a power supply of the digital camera 100, a release switch for instructing image capturing, and a play button for instructing to reproduce the image data. Furthermore, the operation unit 105 includes a connection button for starting communication with an external device via a wireless connection unit 111. In a case where the display unit 106 is a touch display, a touch panel included in the display unit 106 is also included in the operation unit 105.

Note that the release switch includes a switch (SW1) that is turned on when pressed halfway, and a switch (SW2) that is turned on when fully pressed. The control unit 101 recognizes the turning on of the SW1 as an instruction to prepare for capturing a still image. Then, upon detecting the capturing preparation instruction, the control unit 101 executes capturing preparation processing including AF processing and AE processing. Also, the control unit 101 recognizes turning on of the SW2 as an instruction to start capturing a still image. Then, upon detecting the capturing start instruction, the control unit 101 executes an image-capturing operation in accordance with the exposure conditions determined by AE processing, thus generating still image data for recording. The control unit 101 records the still image data for recording in the recording medium 110.

The display unit 106 displays image data obtained through capturing, image data reproduced from the recording medium 110 and the like, GUIs such as a menu screen, setting information of the digital camera 100, and so forth. The display unit 106 functions as an electronic viewfinder (EVF) by continuously performing capturing of moving images in the image capturing unit 102, and displaying of the obtained moving image data on the display unit 106. Note that the display unit 106 need not be a component of the digital camera 100, but may be an external apparatus. In a case where the display unit 106 is an external apparatus, the digital camera 100 outputs, to the display unit 106, image data for display or a signal in a format displayable by the display unit 106.

The microphone 107 converts the ambient sound into an electric signal (audio signal), and outputs the signal to the control unit 101. The control unit 101 performs A/D conversion on the audio signal to generate audio data. In a case of capturing a still image or moving image with audio using the digital camera 100, the control unit 101 enables the microphone 107, and generates still image or moving image data in which the audio data and the image data are associated with each other. In addition, the control unit 101 can record the image data generated by the image capturing unit 102 and the audio data generated by the microphone 107 in association with each other. Note that the microphone 107 may be an external microphone that is connected to the digital camera 100 for use. Also, the microphone 107 may be capable of outputting audio data.

The recording medium 110 may be, for example, at least one of a removable memory card and a built-in non-volatile memory. The recording medium 110 is a recording destination of the image data for recording that is generated by the control unit 101. Note that the recording destination of the image data may be an external storage device that can be accessed by the digital camera 100.

The wireless connection unit 111 is a communication interface to an external apparatus, and, in the present embodiment, is capable of communication using at least one wireless communication method. The wireless connection unit 111 includes constituent elements necessary for a communication method that the wireless connection unit 111 supports. Examples of the constituent elements include an antenna, a connector, a modulator/demodulator circuit, and a transmitter/receiver circuit. The operation of the wireless connection unit 111 is controlled by the control unit 101. In the present embodiment, it is assumed that Internet Protocol (IP) communication (here, communication using TCP/IP) is performed on a wireless LAN through the wireless connection unit 111. The wireless LAN corresponds to a network interface layer compliant with the standard of the IEEE 802.11 series.

Note that the wireless connection unit 111 is capable of operating in an AP mode in which the wireless connection unit 111 operates as an access point (AP) in an infrastructure mode, and a CL mode in which the wireless connection unit 111 operates as a client (CL) in the infrastructure mode. By causing the wireless connection unit 111 to operate in the CL mode, the digital camera 100 can operate as a CL device in the infrastructure mode. In a case where the digital camera 100 operates as the CL device, the digital camera 100 can participate in a local network formed by an access point device located in the vicinity thereof by connecting to the access point device.

By causing the wireless connection unit 111 to operate in the AP mode, the digital camera 100 can also operate as a simplified access point (hereinafter referred to as "simple AP"), which is one type of access point but has a limited function. Specifically, the simple AP does not have a gateway function for connecting an external network and a client device to each other.

When the digital camera 100 operates as the simple AP, the digital camera 100 forms a local network by itself. A client that is present in the communicable range of the wireless connection unit 111 can recognize the digital camera 100 as an access point, and can participate in the local network formed by the digital camera 100. It is assumed that a program for controlling the operation of the wireless connection unit 111 corresponding to the operating mode is held in the non-volatile memory 103.

The wired connection unit 113 is a communication interface, via wired connection, to an external apparatus. In the present embodiment, it is assumed that IP communication (communication using TCP/IP) is performed on a wired LAN through the wired connection unit 113. The wired LAN corresponds to a network interface layer compliant with the IEEE 802.3 standard (or the Ethernet (registered trademark) standard).

Note that the wired connection unit 113 itself may be compliant with a standard different from the wired LAN standard, and a protocol conversion adapter may be mounted to the wired connection unit 113 to support the wired LAN communication. For example, the wired connection unit 113 may be a USB interface, and include a USB-wired LAN conversion adapter mounted thereto. The operation of the wired connection unit 113 is controlled by the control unit 101.

As will be described below, which one of the wireless connection unit 111 and the wired connection unit 113 is to be used in the digital camera 100 for communication with an external device can be selected by the user from a menu screen. Also, which one of the wireless connection unit 111 and the wired connection unit 113 is to be used may be automatically selected by the control unit 101 according to the use of the communication, or the like.

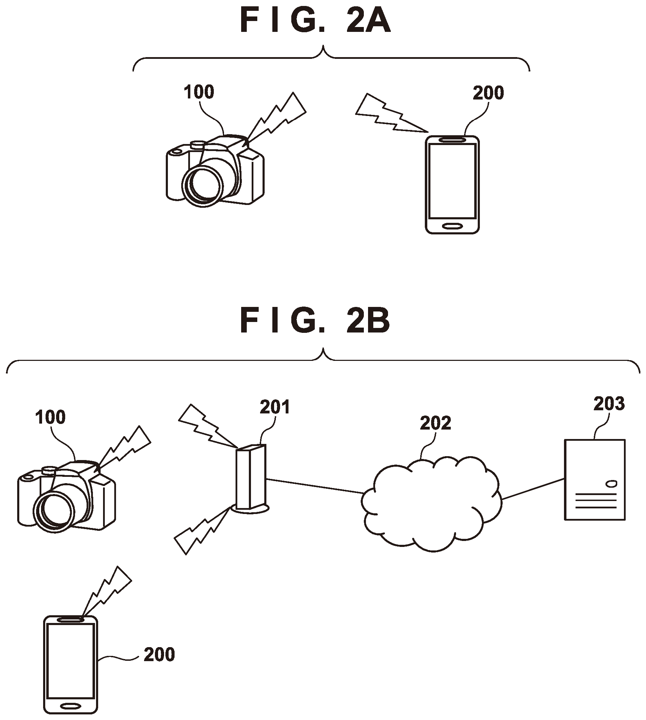

Figs. 2A to 2B are schematic diagrams showing examples of the configuration of connection between the digital camera 100 and an external device. Fig. 2A shows a state in which the digital camera 100 is operating as the simple AP. In this case, when an external communication device 200 participates in the local network formed by the simple AP, the digital camera 100 and the external communication device 200 can communicate with each other. Since the simple AP is not connected to the external network, the digital camera 100 and the external communication device 200 can only communicate with a communication device on the local network formed by the simple AP.

With the connection configuration shown in Fig. 2A, it is possible, for example, to remotely control the digital camera 100 from the external communication device 200, and transfer image data from the digital camera 100 to the external communication device 200. In this case, the communication protocol (application layer protocol on Internet Protocol) between the digital camera 100 and the external communication device 200 may be, for example, a Picture Transfer Protocol (PTP) (including PTP-IP). PTP is standardized as ISO 15740. Note that PTP-IP is an abbreviation of PTP over TCP/IP networks, and is a protocol layer for using PTP on TCP/IP. PTP-IP is standardized as CIPA DC-005-2005 by Camera & Imaging Products Association.

Fig. 2B shows a state in which an external device 201, which is, for example, a wireless LAN router, forms a local network, and the digital camera 100 and the external communication device 200 participate in the local network. The digital camera 100 and the external communication device 200 participate in the local network formed by the external device 201, and therefore can communicate with each other through the external device 201. Accordingly, as in the case of Fig. 2A, it is possible to remotely control the digital camera 100 from the external communication device 200, and transfer image data from the digital camera 100 to the external communication device 200. In addition, the participation in the local network formed by the external device 201 can also be made via wired connection, and the digital camera 100 can also participate, through the wired connection unit 113, in the local network formed by the external device 201.

Furthermore, the external device 201 is connected to an external network 202 (e.g., the Internet), and has a function (e.g., address conversion function or the like) for allowing the external network 202 and a device on the local network formed by the external device 201 to communicate with each other. Accordingly, the digital camera 100 and the external communication device 200 can also communicate with an external communication device 203 on the external network 202 through the external device 201. The communication protocol (application layer protocol) between the external communication device 200, and the digital camera 100 and the external communication device 203 may be a HyperText Transfer Protocol (HTTP), for example.

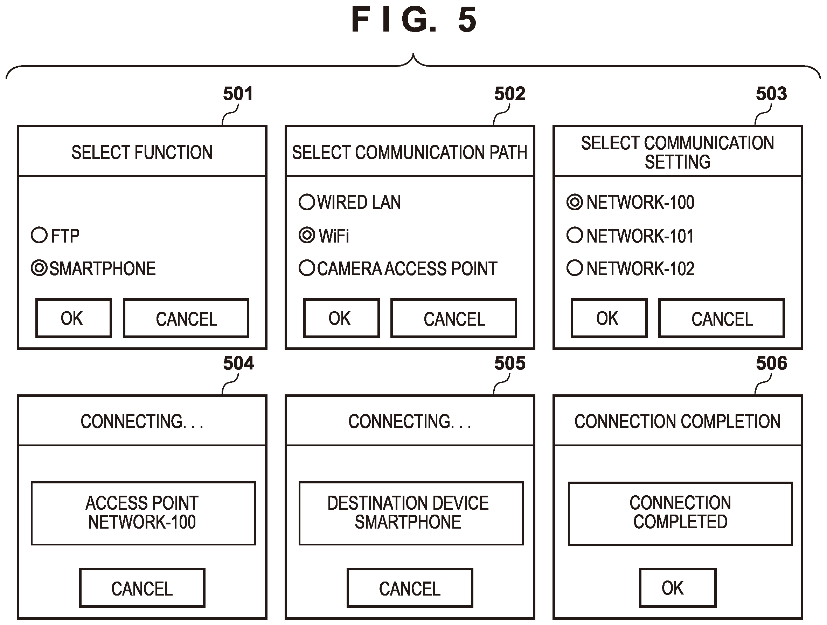

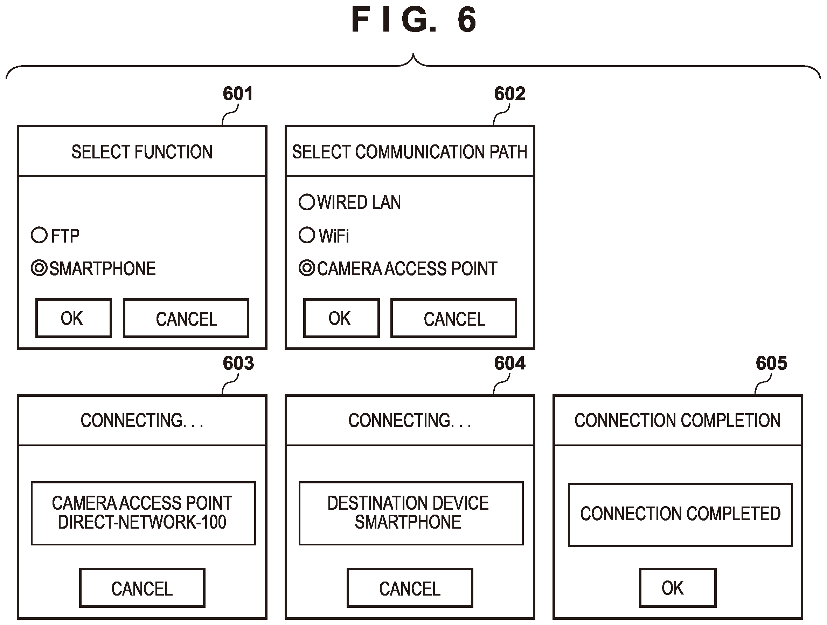

Figs. 5 and 6 are diagrams showing examples of a screen displayed on the display unit 106 of the digital camera 100 for setting communication with an external device. For example, when an item of communication setting is selected from a menu screen with the operation unit 105, the control unit 101 displays an initial screen 501 on the display unit 106. Note that, in Figs. 5 and 6, initial screens 501 and 601 are the same, and path selection screens 502 and 602 are the same. Since communication paths selected on the path selection screens 502 and 602 differ from each other, the screen transition after 503 and the screen transition after 603 differ from each other.

The initial screen 501 is a screen for selecting a function that is to be used for communication with an external device. Here, "FTP" and "Smartphone" are displayed as options. "FTP" indicates a function for transferring image data to an external apparatus, and "Smartphone" indicates a function for remotely operating the digital camera 100 by an external device (here, assumed to be a smartphone). The options may have names directly representing the respective functions such as "data transfer" and "remote operation".

Here, for the sake of convenience, "Smartphone" indicates a remote operation function in order to clarify the difference from "FTP" in a case where the options represent functions. However, the options may be types of external devices. In this case, "Smartphone" indicates implementation of a function for coordination with a smartphone (e.g., transfer of image data to the smartphone, remote operation of the digital camera by the smartphone). Also, for "FTP", the name of an external device other than a smartphone, such as "PC" or "Cloud storage", is used.

The user uses the operation unit 105 to place the desired one of "FTP" and "Smartphone" in a selected state, and performs an operation of pressing an "OK" button. The operation of pressing the "OK" button may be pressing of, for example, a "Set" button included in the operation unit 105. Upon detecting the operation of pressing the "OK" button, the control unit 101 displays the path selection screen 502 on the display unit 106. Here, upon detecting the operation of pressing a "Cancel" button on the initial screen 501, the control unit 101 ends the display of the initial screen 501. The operation of pressing the "Cancel" button may be pressing of, for example, a "Back" button included in the operation unit 105.

The path selection screen 502 is a selection screen for the type (path) of communication used for the function selected on the initial screen 501. On the path selection screen 502, "Wired LAN", "WiFi", and "Camera access point" are displayed as options. "Wired LAN" corresponds to communication using the wired connection unit 113, and "WiFi" and "Camera access point" correspond to communication using the wireless connection unit 111. Also, "Camera access point" corresponds to communication in which the wireless connection unit 111 is operated in the AP mode. "WiFi" corresponds to communication in which the wireless connection unit 111 is operated in the CL mode.

"WiFi" and "Camera access point" are in the selected state on the path selection screen 502 and the path selection screen 602, respectively. Upon detecting the operation of pressing the "OK" button on the path selection screen 502 or 602, the control unit 101 starts a communication operation for performing communication using the path in the selected state with the external device.

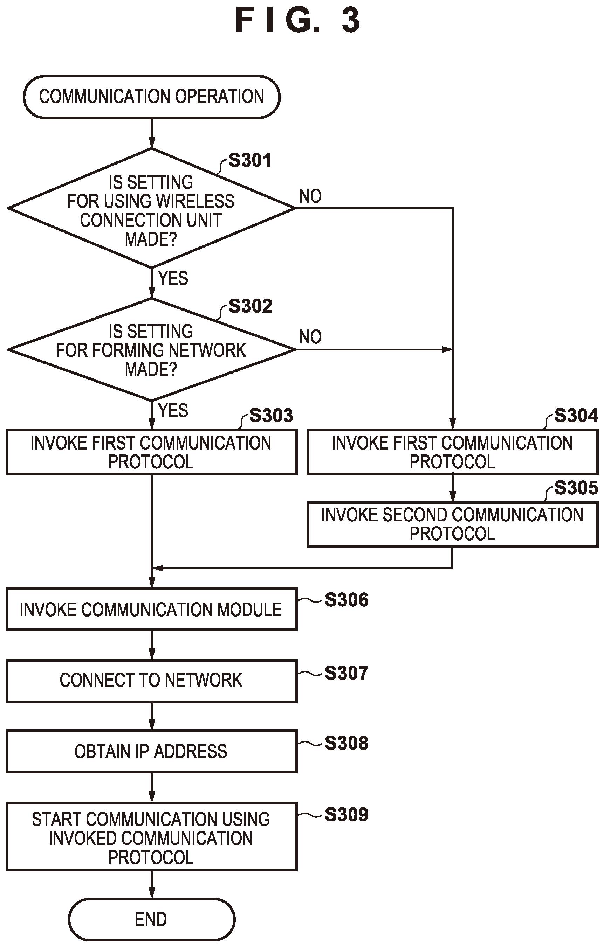

The communication operation executed by the digital camera 100 will be described below with reference to the flowchart shown in Fig. 3. The operation described below is implemented, for example, by the control unit 101 reading a program stored in the non-volatile memory 103 into the work memory 104, and executing the program by the CPU.

In S301, the control unit 101 determines whether "WiFi" or "Camera access point" is in the selected state on the path selection screen. This determination is synonymous with determination as to whether a setting for using the wireless connection unit 111 has been made. The control unit 101 executes S302 if it is determined that a setting for using the wireless connection unit 111 has been made, and executes S304 if it is not thus determined.

In S302, the control unit 101 determines whether "Camera access point" is in the selected state on the path selection screen. This determination is synonymous with determination as to whether a setting for forming a local network by the wireless connection unit 111 has been made. The control unit 101 executes S303 if it is determined that a setting for forming a local network by the wireless connection unit 111 has been made, and executes S304 if it is not thus determined.

In S303, the control unit 101 invokes a protocol (first communication protocol) used in the communication configuration shown in Fig. 2A. Here, a smartphone is designated as the external communication device on the initial screen 501, an application layer protocol (e.g., PTP) used in communication with the smartphone is invoked. Thereafter, the control unit 101 executes S306.

In S304, the control unit 101 invokes a protocol (first communication protocol) used in communication with an external communication device on the same local network in the communication configuration shown in Fig. 2B. Here, since a smartphone is designated as the external communication device on the initial screen 501, an application layer protocol (e.g., PTP) used in communication with the smartphone is invoked. The protocols invoked in S303 and S304 are the same.

In S305, the control unit 101 invokes an application layer protocol (second communication protocol) used in communication with an external communication device on an external network in the communication configuration shown in Fig. 2B. Here, the external network is assumed to be the Internet, and the control unit 101 invokes HTTP as the second communication protocol. Thereafter, the control unit 101 executes S306.

Note that invoking a protocol means making the protocol ready for use. For example, this may be starting execution of a program for performing data transmission/reception according to the protocol.

In S306, the control unit 101 invokes a communication module for performing the function of a network interface layer. Specifically, if it is not determined, in S301, that a setting for using the wireless connection unit 111 has been made, the control unit 101 enables the operation of the wired connection unit 113, and invokes a wired LAN communication module.

If it is determined, in S301, that a setting for using the wireless connection unit 111 has been made, the control unit 101 enables the operation of the wireless connection unit 111, and invokes a wireless LAN communication module. Furthermore, if it is determined, in S302, that a setting for forming a local network by the wireless connection unit 111 has been made, the control unit 101 causes the wireless connection unit 111 to operate in the AP mode to start functioning as the simple AP. Then, the control unit 101 displays, on the display unit 106, the camera AP screen 603 (Fig. 6) that displays the SSID of the simple AP generated by the wireless connection unit 111. The camera AP screen 603 shows an example in which the wireless connection unit 111 has formed a local network having the SSID "DIRECT-NETWORK-100".

On the other hand, if it is not determined, in S302, that a setting for forming a local network by the wireless connection unit 111 has been made, the control unit 101 causes the wireless connection unit 111 to operate in the CL mode to start searching for APs that are present in the communication range. Then, the control unit 101 displays, on the display unit 106, a list display screen 503 (Fig. 5) of the SSIDs found by the search. The list display screen 503 shows an example in which three access points respectively having the SSIDs "NETWORK-100", "NETWORK-101", and "NETWORK-102" were found.

When the processing in S306 ends, the control unit 101 executes S307. In S307, the control unit 101 connects to the local network using the communication module invoked in S306. For example, in a case where the wireless connection unit 111 is operating in the CL mode, the control unit 101 controls the operation of the wireless connection unit 111 to participate in the local network having the SSID that has been selected by the user through the list display screen 503. For example, it is assumed that the control unit 101 has detected the operation of pressing the "OK" button when the SSID "NETWORK-100" is in the selected state on the list display screen 503. In this case, the control unit 101 controls the operation of the wireless connection unit 111 to participate in the local network having the SSID "NETWORK-100". When the operation of participating in the local network starts, the control unit 101 displays a connecting screen 504 instead of the list display screen 503 on the display unit 106. The SSID of the local network to be connected is displayed on the connecting screen 504. When the connection is completed, the control unit 101 displays a connection completion screen 506 on the display unit 106, and executes S308.

In a case where the wired connection unit 113 is operating, the control unit 101 controls the wired connection unit 113 to connect to the local network formed by the external device 201. When the connection is completed, the connection completion screen 506 is displayed on the display unit 106, and the control unit 101 executes S308.

On the other hand, in a case where the wireless connection unit 111 is operating in the AP mode, the control unit 101 executes S308 while starting monitoring of reception of a participation request from the external communication device 200. Upon receiving a participation request during execution of S308, the control unit 101 displays, on the display unit 106, the connecting screen 505 including information relating to the external device from which the request originates. When the connection is completed, the control unit 101 displays the connection completion screen 506 on the display unit 106.

In S308, the control unit 101 obtains an IP address. Upon obtaining an IP address, the control unit 101 executes S309. In a case where the wired connection unit 113 is operating, or the wireless connection unit 111 is operating in the CL mode, the control unit 101 obtains an IP address from the external device forming the local network to which the connection has been made in S307, or from a preset DHCP server. Alternatively, the control unit 101 may obtain, from the non-volatile memory 103, a fixed IP address set for the digital camera 100.

In a case where the wireless connection unit 111 is operating in the AP mode, the control unit 101 obtains, from the non-volatile memory 103, the fixed IP address set for the digital camera 100. Note that the wireless connection unit 111 operating in the AP mode has a DHCP server function, and assigns an IP address to an external device participating in the local network formed by the wireless connection unit 111.

In S309, the control unit 101 establishes a connection to an external communication device using the first communication protocol, or the first and second communication protocols. In a case where S303 has been executed, the control unit 101 establishes a connection to an external communication device using the first communication protocol. On the other hand, in a case where S304 and S305 have been executed, the control unit 101 establishes connections to one external communication device (smartphone) 200 and the external communication device 203 on the external network 202 using the first communication protocol and the second communication protocol, respectively. When the connections are completed, the control unit 101 executes a predetermined operation using communication with the external communication devices on the established connections.

For example, the control unit 101 controls the operation of the digital camera 100 to execute an operation in accordance with a command received from the smartphone through communication with the smartphone using the first communication protocol (here, PTP). The command may be generated, for example, by the smartphone according to a GUI operation on a remote operation application executed on the smartphone. In addition, the control unit 101 starts transferring moving image data for live-view display to the smartphone. Thus, the control unit 101 realizes the function of remotely operating the digital camera 100 using the smartphone.

Through communication with the external communication device 203 on the external network 202, using the second communication protocol (here, HTTP), the control unit 101 checks, for example, whether a firmware update is available for the digital camera 100. Specifically, the control unit 101 accesses a URL of the external communication device 203 that includes information of the current firmware version of the digital camera 100, thereby obtaining, from the external communication device 203, information relating to the availability of a firmware update.

In a case where it is apparent that communication with the external communication device on the external network will not be performed, including, for example, a case where the digital camera 100 itself is set to form a local network, the digital camera 100 does not run the communication protocol used for communication with the external network. This can eliminate the execution of unnecessary operations, thus making it possible to realize a shorter time required for connection to the external communication device, and a reduced power consumption. On the other hand, in a case where there is a possibility that communication with the external communication device on the external network may be executed, the communication protocol used for communication with the external communication device on the external network is invoked. Accordingly, in a case where communication with the external communication device on the external network is necessary, the communication can be immediately executed.

### Second Embodiment

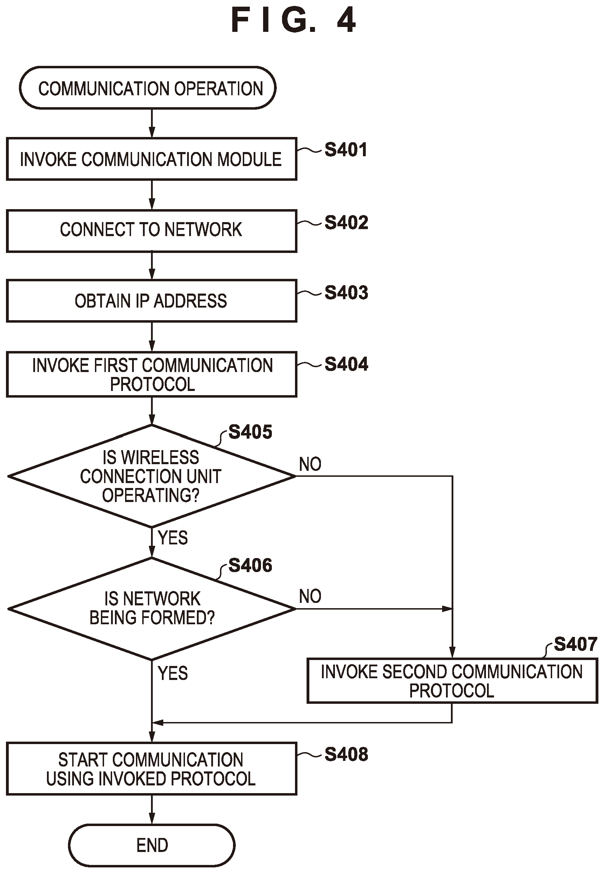

Next, a second embodiment will be described. The present embodiment differs from the first embodiment with regard to the communication operation executed by the digital camera 100. Therefore, the communication operation according to the present embodiment will be described below with reference to Fig. 4. The communication operation according to the present embodiment is also executed by the control unit 101 in response to detecting the operation of pressing the "OK" button on the path selection screen 502 or 602.

In Fig. 4, the processing from S401 to S403 is the same as the processing from S306 to S308 in the first embodiment, and therefore the description thereof has been omitted.

In S404, the control unit 101 invokes the first communication protocol as in the case of S303 or S304. Since a smartphone is designated here as the external communication device on the initial screen 501, the application layer protocol (e.g., PTP) used for communication with the smartphone is invoked. Thereafter, the control unit 101 executes S405.

In this manner, in the present embodiment, the first communication protocol, which is used for communication with the smartphone in both the connection configuration in Fig. 2A and the connection configuration in Fig. 2B, is invoked before determining whether or not to use the wireless connection unit 111, or determining the operating mode of the wireless connection unit 111.

The operations in S405 and S406 may be substantially the same as the operations in S301 and S302 of the first embodiment. However, since the communication module has already been invoked in S401 in the present embodiment, S405 and S406 may be executed based on whether or not the wireless connection unit is operating, and the operating mode, instead of the determination based on the setting.

The operation in S407 is the same as the operation in S305 of the first embodiment. In addition, the operation in S408 is the same as the operation in S309 of the first embodiment.

In this manner, the same effects as those achieved in the first embodiment can also be achieved by determining a protocol to be invoked, after a communication module has been invoked as in the present embodiment.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. A communication apparatus (100) capable of communicating with an external communication device (200, 201) using Internet Protocol, the communication apparatus (100) comprising control means (101) for controlling the communication apparatus (100) so as to:
in a case of performing communication with a first external communication device (200, 201) on a local network,
run a first communication protocol and a second communication protocol as application layer protocols on the Internet Protocol in a case where communication with an external network (202) can be performed through the local network, and
run the first communication protocol and not run the second communication protocol in a case where communication with the external network (202) (202) cannot be performed.

2. The communication apparatus (100) according to claim 1, wherein
the first communication protocol is used for communication with the first external communication device (200, 201), and the second communication protocol is used for communication with a second external communication device (203) on the external network.

3. The communication apparatus (100) according to claim 1 or 2, wherein
the control means (101) controls the communication apparatus (100) so as to run the first communication protocol and not run the second communication protocol in a case where the communication apparatus (100) forms the local network.

4. The communication apparatus (100) according to claim 3, wherein
the communication apparatus (100) does not have a gateway function for the external network.

5. The communication apparatus (100) according to claim 1, wherein
the control means (101) controls the communication apparatus (100) so as to run the first communication protocol and the second communication protocol in a case where an external device other than the communication apparatus (100) and the first external communication device (200, 201) forms the local network.

6. The communication apparatus (100) according to claim 5, wherein
the external device has a gateway function for the external network.

7. The communication apparatus (100) according to any one of claims 1 to 6, wherein
the communication apparatus (100) is an image capture apparatus, and the first communication protocol is Picture Transfer Protocol (PTP).

8. The communication apparatus (100) according to claim 7, wherein
the external network (202) is the Internet.

9. The communication apparatus (100) according to claim 8, wherein
the second communication protocol is HyperText Transfer Protocol (HTTP).

10. The communication apparatus (100) according to claim 9, wherein,
in a case of running the second communication protocol, the communication apparatus (100) makes an inquiry to an external communication device (203) on the external network (202) as to whether a firmware update is available for the communication apparatus (100) .

11. A control method of a communication apparatus (100) that is capable of communicating with an external communication device (200, 201) using Internet Protocol, the method comprising:
in a case of performing communication with a first external communication device (200, 201) on a local network,
running a first communication protocol and a second communication protocol as application layer protocols on the Internet Protocol in a case where communication with an external network (202) can be performed through the local network, and
running the first communication protocol and not running the second communication protocol in a case where communication with the external network (202) cannot be performed.

12. A computer program that, when executed by a computer of a communication apparatus (100) that is capable of communicating with an external communication device (200, 201) using Internet Protocol, causes the computer to perform the control method according to claim 11.
